# EUROPEAN PATENT APPLICATION

(11) **EP 4 586 545 A1**
(43) Date of publication of application: **16.07.2025**
(21) Application number: 24221107.6
(22) Date of filing: 18.12.2024
(51) Int. Cl.: H04L 9/08, G06T 1/00, H04L 9/32

(54) **DEVICE AND METHOD FOR GENERATING WATERMARKED MEDIA**

(30) Priority: 15.01.2024 KR 20240005819
(71) Applicant: ICTK Co., Ltd., Seoul 06241 (KR)
(72) Inventor: LEE, Jung Won, 06067 Seoul (KR); LEE, Jae Seong, 05240 Seoul (KR); JEON, Du Hyun, 02225 Seoul (KR)
(74) Representative: Fuchs Patentanwälte Partnerschaft mbB

(57) **Abstract**

Embodiments disclose a generation method and a generation device that use a physically unclonable function (PUF).

## Description

### CROSS REFERENCE TO RELATED APPLICATION

The present application claims priority to Korean Patent Application No. 10-2024-0005819, filed Jan 15, 2024, the entire contents of which is incorporated herein for all purposes by this reference.

### BACKGROUND OF THE INVENTION

### Field of the Invention

Embodiments relate to a device and method for generating a watermarked media.

### Description of the Related Art

With the recent development of artificial intelligence technologies, modulated digital content can be easily produced by changing some information of a digital content into desired information. The digital content modulated in this way can be used for a crime, etc. In addition, evidence can be fabricated or distorted to the modulated digital content to conceal the facts of the crime. For this reason, there is a need for technologies that ensure that a digital content is not modulated and original information is maintained.

In addition, with the recent development of multimedia data compression technologies, a high-quality digital content is being distributed quickly and widely. Since the digital content is easily copied and transmitted, when the digital content is leaked without permission, resulting in irreversible damage to a copyright holder of the digital content.

To prevent copyright infringement on a digital content, various copyright protection techniques are being studied.

A digital object identifier (DOI), digital right management (DRM), watermarking, etc. are known as technologies to protect copyrights for a digital content.

The DOI technology is a copyright tracking technology and a standard specification that gives a unique number to a digital content and converts the unique number into a uniform resource locator (URL) to facilitate access to the corresponding position on the Internet.

The DRM technology is a technology that safely protects the rights and interests of digital content providers and prevents piracy and is a technology that collectively supports creation, distribution, and management of a digital content, such as imposing user fees, payment agency, etc.

The watermarking technology is a technology that invisibly inserts or extracts copyright information into a digital content. In general, watermarking can be classified according to the type of work, the degree of recognition, and the purpose of use. Basically, the watermarking technology requires invisibility indicating that human eyes can be prevented from recognizing when watermarks are inserted, toughness indicating that watermarks can be extracted even in various forms of modification or attack, and clarity indicating that reliable ownership can be claimed using the extracted watermark.

For example, several conventional techniques are known about how to insert and extract watermarks into and from joint photographic coding experiments group (JPEG) images or media data.

However, since the advancement of watermark removal technologies degrades safety, the need to response to this is emerging.

### SUMMARY OF THE INVENTION

According to embodiments of the present disclosure, there is provided a generation method and generation device that are capable of protecting a digital content through a watermark to which a physically unclonable function (PUF) is applied in whether media (voices, videos, documents, etc.) are authenticated.

In addition, embodiments can provide a generation method and generation device that have more improved security through conversion, extraction of coefficients, etc.

The objects of embodiments are not limited thereto and may also include objects or effects that may be identified from the configurations or embodiments to be described below.

A method of generating media to which a watermark is applied according to an embodiment includes converting media data into digital media, generating a watermark corresponding to a unique parameter, and inserting the watermark into the digital media and generating a watermarked content, wherein the unique parameter is a physically unclonable function (PUF) value.

In the converting, the digital media may be a result of converting the media data into a frequency domain by Fourier transform.

The generating of the watermark corresponding to the unique parameter may include extracting an attribute value as many as the number corresponding to the number of magnitude peaks of the digital media from the PUF value.

The method may include generating the watermark that reflects the attribute value.

The extracting of the attribute value may include extracting the attribute value when the number of magnitude peaks of the digital media is two or more.

The inserting of the watermark into the digital media and generating the watermarked content may include applying the watermark that reflects the attribute value to a magnitude coefficient of the digital media.

Peaks of the watermarked content and the media data may be the same.

The PUF value may be extracted from at least one of a plurality of circuits based on a PUF.

The PUF value may be a PUF value of a circuit extracted corresponding to the number of peaks among the plurality of circuits.

A device for generating media to which a watermark is applied includes a conversion unit configured to convert media data into digital media, a parameter generation unit configured to generate a unique parameter, a watermark generation unit configured to generate a watermark corresponding to the unique parameter, and an insertion unit configured to insert the watermark into the digital media and generate a watermarked content, wherein the unique parameter is a physically unclonable function (PUF) value.

The digital media may be the result of converting media data into a frequency domain by Fourier transform.

The watermark generation unit may extract an attribute value as many as the number corresponding to the number of magnitude peaks of the digital media from the PUF value.

The watermark generation unit may generate the watermark that reflects the attribute value.

The watermark generation unit may extract the attribute value when the number of magnitude peaks of the digital media is two or more.

The insertion unit may apply the watermark that reflects the attribute value to a magnitude coefficient of the digital media.

The number of peaks of the watermarked content may be equal to the number of peaks of media data.

The PUF value may be extracted from at least one of a plurality of circuits based on a PUF.

The PUF value may be a PUF value of a circuit extracted corresponding to the number of peaks among the plurality of circuits.

A computer-readable recording medium in which a computer program is stored includes a command for allowing a processor to perform a method of generating media to which a watermark is applied, the method including converting media data into digital media, generating a watermark corresponding to a unique parameter, and inserting the watermark into the digital media and generating a watermarked content, wherein the unique parameter is a physically unclonable function (PUF) value.

The generating of the watermark corresponding to the unique parameter may include extracting an attribute value as many as the number corresponding to the number of magnitude peaks of the digital media from the PUF value.

### BRIEF DESCRIPTION OF THE DRAWINGS

FIG. 1 is a block diagram illustrating a device for generating media to which a watermark is applied according to an embodiment.
FIG. 2 is a detailed diagram illustrating the device for generating media to which a watermark is applied according to the embodiment.
FIG. 3 is a view illustrating a device for verifying media to which a watermark is applied according to the embodiment.
FIG. 4 is a flowchart illustrating a method of generating media to which a watermark is applied according to the embodiment.
FIG. 5 is a view for describing the operation of an insertion unit of the device for generating media to which a watermark is applied.
FIG. 6 is a view illustrating a process of adopting a watermark.
FIG. 7 is a flowchart illustrating a method of verifying media to which a watermark is applied according to the embodiment.

### DETAILED DESCRIPTION OF THE INVENTION

Since the present invention may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present invention.

Terms including ordinal numbers such as first and second may be used to describe various components, but the components are not limited by the terms. The terms are used only for the purpose of distinguishing one component from another. For example, a second component may be referred to as a first component, and similarly, the first component may also be referred to as the second component without departing from the scope of the present invention. The term "and/or" includes a combination of a plurality of related listed items or any of the plurality of related listed items.

When a first component is described as being "connected" or "coupled" to a second component, it should be understood that the first component may be directly connected or coupled to the second component or a third component may be present therebetween. On the other hand, when a certain component is described as being "directly connected" or "directly coupled" to another component, it should be understood that others components are not present therebetween.

The terms used in the present application are only used to describe specific embodiments and are not intended to limit the present invention. The singular includes the plural unless the context clearly dictates otherwise. In the application, it should be understood that terms "include" and "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those of ordinary skill in the art to which the present invention pertains. Terms such as those defined in a commonly used dictionary should be construed as having a meaning consistent with the meaning in the context of the related art and should not be construed in an ideal or excessively formal meaning unless explicitly defined in the application.

In addition, some embodiments may be composed of functional block components and various processing operations. Some or all of these functional blocks may be implemented with various numbers of hardware and/or software components that execute specific functions. For example, the functional blocks of the present disclosure may be implemented by one or more processors or microprocessors or circuit components for performing an intended function. In addition, for example, the functional blocks of the present disclosure may be implemented in various programming or script languages. The functional blocks may be implemented as algorithms executed in one or more processors. In addition, the present disclosure may adapt conventional technologies for electronic environment setting, signal processing, and/or data processing. Terms such as modules and components may be generally used and are not limited to mechanical and physical components.

Hereinafter, embodiments will be described in detail with reference to the accompanying drawings, and the same or corresponding components are denoted by the same reference numeral regardless of the reference numerals, and overlapping descriptions thereof will be omitted.

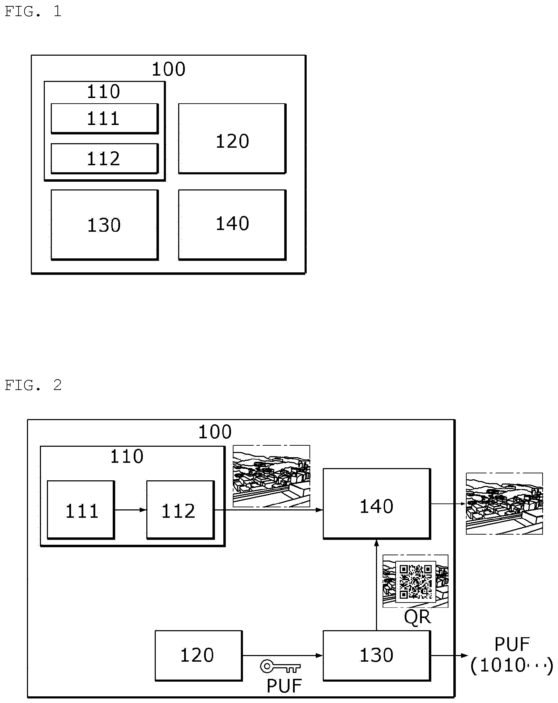

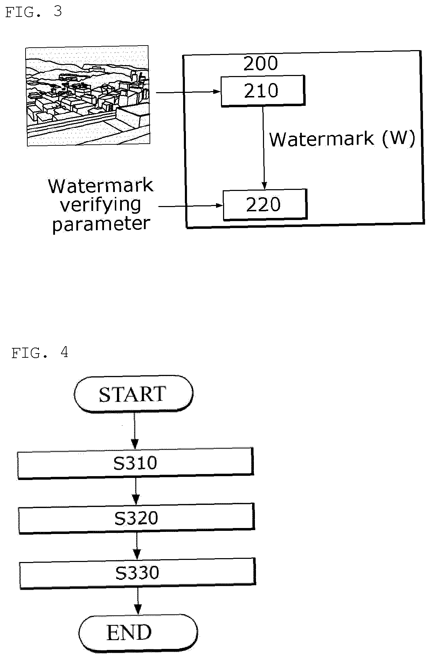

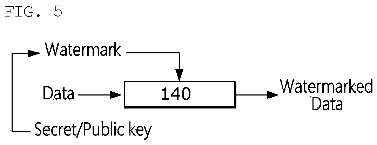

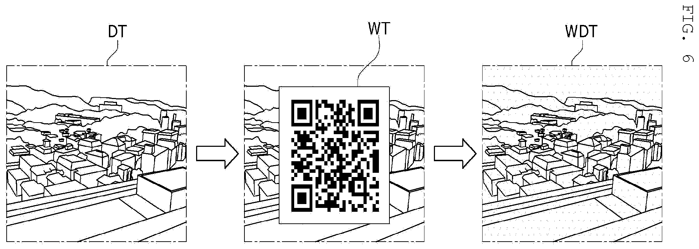

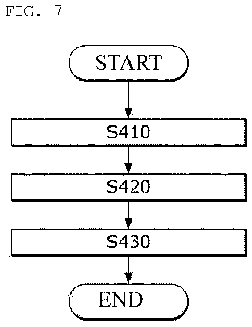

FIG. 1 is a block diagram illustrating a device for generating media to which a watermark is applied according to an embodiment, FIG. 2 is a detailed diagram illustrating the device for generating media to which a watermark is applied according to the embodiment, FIG. 3 is a view illustrating a device for verifying media to which a watermark is applied according to the embodiment, FIG. 4 is a flowchart illustrating a method of generating media to which a watermark is applied according to the embodiment, FIG. 5 is a view for describing the operation of an insertion unit of the device for generating media to which a watermark is applied, FIG. 6 is a view illustrating a process of adopting a watermark, and FIG. 7 is a flowchart illustrating a method of verifying media to which a watermark is applied according to the embodiment.

Referring to FIGS. 1 and 2, a device 100 for generating media to which a watermark is applied according to an embodiment includes a media module 110, a parameter generation unit 120, a watermark generation unit 130, and an insertion unit 140. An operation of each unit, etc. may be performed by a processor. The processor is a calculation device for processing a normal operation performed by the generation device 100 and may include, for example, a central processing unit (CPU), a micro controller unit (MCU), etc.

The media module 110 may include an input unit 111 and a conversion unit 112. The media module 110 may convert input or generated media (e.g., images, videos, etc.) into digital media.

For example, the input unit 111 may be a device for generating media or connected to the device for generating media. Therefore, media may be generated or input through the input unit 111.

The conversion unit 112 may perform frequency conversion. For example, the conversion unit 112 may frequency-convert the media data input or generated through the input unit 111. Therefore, the media data may be converted into digital media through the conversion unit 112. For example, the digital media may be the result of converting media data into a frequency domain by Fourier transform.

For example, the conversion unit 112 may include a discrete cosine transform (DCT). The DCT stands for discrete cosine transform and is an algorithm that converts data from a spatial domain to a frequency domain. For example, the conversion unit 112 may convert an image (media) on a time axis to a frequency axis by performing the DCT. Therefore, most of components of signal energy may be concentrated on some of low frequency components after the DCT.

The parameter generation unit 120 may generate a unique parameter. In the parameter generation unit 120, the unique parameter may be unique information capable of distinguishing one media generation device 100 from other media generation devices. The unique parameter may be information distinguished from other products. Furthermore, even the same product from the same manufacturer may have different unique parameters for each product, which may be a physically unclonable function (PUF) value.

Here, a watermark may be determined based on the PUF of the parameter generation unit 120. The PUF may provide an unpredictable digital value determined based on a process deviation in a manufacturing process. Details of the PUF will be described below.

In addition, an authentication key generated by the parameter generation unit 120 is a key (e.g., a secret key, a private key, etc.) based on an encryption method such as an asymmetric key, and when a previously registered authentication key is present, the previously registered authentication key may be removed, and a new or updated authentication key may be used to form a communication channel. Detailed description thereof will be provided below.

In addition, according to an embodiment, the parameter generation unit 120 can provide the effect of maintaining a high level of security by storing the key in an internal memory based on the secret key and updating the stored key.

The PUF of the parameter generation unit 120 according to the embodiment may provide an unpredictable digital value. Even when individual PUFs are accurately manufactured in the same manufacturing process, digital values provided by the individual PUFs may be different due to a process deviation. Therefore, the PUF may also be referred to as a physical one-way function practically impossible to be duplicated (POWF). In addition, the PUF may be used to generate authentication keys for security, communication, and/or device authentication.

There are several embodiments in which PUFs are implemented in the present disclosure. For example, as described above, the PUF may be implemented using the process variation of the semiconductor manufacturing process. Specifically, the PUF according to the embodiment may be implemented by vias or inter-layer contacts disposed between conductive layers.

In an embodiment, for example, the number of plurality of PUF vias may be several, dozens, or hundreds or more. In this case, based on whether each PUF via is formed, the PUF may provide a predetermined output. For example, an output (e.g., digital) of 0 or 1 may be provided based on whether each PUF via is formed. That is, a single bit may be output from each of PUF-based elements (e.g., passive elements). Therefore, the plurality of circuits are PUF (e.g., PUF via)-based circuits and may be composed of circuits with various outputs according to a combination of the plurality of PUF vias.

Based on this, according to an embodiment, an extraction circuit including at least one of the plurality of PUF-based circuits may extract a PUF output based on the process deviation of the semiconductor manufacturing process (S320). For example, the plurality of circuits may include Circuit 1, Circuit 2, and Circuit 3. The plurality of circuits may not be limited to Circuits 1 to 3.

Each of the plurality of circuits may correspond to a selection circuit (pre-selection). That is, each of the plurality of circuits may correspond to a verified selection circuit. The selection circuit may be a circuit in which randomness and uniqueness among the plurality of circuits combined with each element have been verified in advance.

In addition, the plurality of circuits may be formed of a connection relationship of one or more of the PUF-implemented elements in the generation module or elements (e.g., vias or contacts) required for PUF implementation. That is, each of the plurality of circuits may be a connection relationship or a combination of one or more of the elements (e.g., vias or contacts) required to implement the PUF in the generation device. Therefore, the plurality of circuits are pre-verified and may ensure randomness and uniqueness.

In addition, according to an embodiment, outputs of the plurality of circuits may be different depending on the PUF. That is, the plurality of circuits may be composed of different connection relationships of one or more of the elements (e.g., vias or contacts) required to implement the PUF in the generation device to provide different outputs.

In addition the PUF circuit may be implemented in a portion of a semiconductor chip. Therefore, it may be difficult to identify an accurate position of the PUF circuit when observed from the outside. That is, since countless vias or inter-layer contacts are present in semiconductor circuits, it is difficult to determine which parts are used as PUFs, and such a point is advantageous in terms of security.

Furthermore, according to an embodiment, the PUF that provides a secret key may be composed of a plurality of circuits instead of a single circuit. In addition, in an embodiment, a circuit between PUF vias formed in a module or chip may be formed as a plurality of circuits. For example, a PUF may be implemented using an active element and a passive element. A PUF implemented using only the active element may provide the same PUF output value despite changes in temperature, voltage, and current in order to satisfy the essential requirement of constancy and use an error correction code including data (helper data) for correcting the changed value in order to check whether the value is changed and correct the error.

Furthermore, the above-described outputs of the plurality of circuits may be generated by electrical characteristics of the passive element. For example, when 5000 elements are present in the generation device, an output of the selected or extracted extraction circuit may be generated by selecting (or extracting) about 3000 elements (e.g., passive elements). In addition, a random value of, for example, 3000 bits may be output in response to about 3000 elements. Therefore, the generation device according to the embodiment may have multiple or a plurality of circuits that may be selected or extracted as in the generation method described below, and a unique and random identifier (ID) may be generated through the extracted or selected circuit among the plurality of circuits. In particular, a bit used in the PUF may additionally vary depending on the number of peaks of the digital media. Therefore, security can be further reinforced. In addition, the extractable or selectable circuit among the plurality of circuits may be pre-verified to have randomness and uniqueness, and the verified circuit may be designed or algorithmized to be an extraction circuit or a selection circuit.

The generation device 100 may further include a memory (not illustrated). The memory (not illustrated) may store data necessary for an authentication operation. For example, the memory (not illustrated) may store the authentication key and secret key generated according to the above description. In addition, the memory (not illustrated) may store a secret key corresponding to an identifier ID called a PUF. For example, the processor may encrypt the authentication key or secret key of the generated key pair to an ID called a PUF and store the encrypted key in the memory.

The watermark generation unit 130 may generate a watermark corresponding to a unique parameter. The watermark generation unit 130 may extract attribute values from the PUF value, which is a unique parameter, as many as the number corresponding to the number of magnitude peaks of the digital media. For example, the watermark generation unit 130 may extract the degrees (number) of magnitudes or magnitude peaks of the digital media that are greater or smaller than a predetermined value from the PU F value. For example, the watermark generation unit 130 may extract some of the bits of the PUF value in response to the number of magnitudes or magnitude peaks of the digital media that are greater than the predetermined value. With this configuration, watermarks that reflects different secret keys may be generated using one PUF value. Therefore, security can be further improved.

Through the conversion unit 112, a low frequency band may be classified as an area with a small color change and a high frequency band may be classified as an area with a great color change among magnitudes (or coefficients) by frequency conversion (e.g., DCT). For example, human vision may be more sensitive to the area with a small color change than the area with a great color change.

Therefore, the watermark generation unit 130 may extract a PUF value corresponding to the number of magnitude peaks greater than the predetermined value as an attribute value. For example, the PUF value may be a digital value, and when the number of magnitude peaks greater than the predetermined value is 8, previous 8 values or the last 8 values among the PUF values may be extracted as attribute values. In addition, the watermark generation unit 130 may generate a watermark that reflects an attribute value. Therefore, even when the watermark is applied to original media data, it may be difficult for a person to recognize a change caused by adapting the watermark. Therefore, security can be reinforced.

In addition, as described above, the PUF value may be extracted from at least one of the plurality of circuits based on a PUF. In this case, the PUF value may be a PUF value of a circuit extracted corresponding to the number of peaks among the plurality of circuits. Therefore, a watermark may be generated based on a PUF value selected in response to the number of peaks from a PUF circuit having a plurality of arrays. Therefore, even when the same watermark generation method is applied to the same digital media, different watermarks may be generated according to the generation device, thereby further improving the security of the watermark.

Furthermore, the watermark is an identifier and may be represented by various patterns, digital values, etc. In addition, in addition to copyright-related information, watermarks may include various pieces of information related to a digital content (e.g., uniform resource locator information (URL) about the source of a digital content).

The insertion unit 140 may insert the watermark into the digital media. In addition, the insertion unit 140 may generate a watermarked content through the above-described insertion. The watermarked content adapts only a watermark and may be the same media as the media input or generated by the input unit, etc.

The insertion unit 140 may apply the watermark that reflects the attribute value to a magnitude coefficient of the digital media. The attribute value may be applied by being multiplied by the magnitude (or coefficient). Therefore, a watermark that extracts an attribute value may be applied, in particular, when the number of magnitude peaks of the digital media is two or more. One magnitude peak can prevent a case in which 1x, etc. is achieved depending on a digital value.

Furthermore, the number of peaks of the watermarked content may be equal to the number of peaks of media data.

Referring further to FIGS. 4 to 6, a method of generating media to which a watermark is applied according to an embodiment may include converting media data into digital media (S310), generating a watermark corresponding to a unique parameter (S320), and generating a watermarked content by inserting a watermark into the digital media (S330).

Hereinafter, the contents described in the above-described generation device may be applied in the same manner.

Therefore, the media module 110 or the conversion unit 112 may convert the media data into digital media DT (S310). In the present specification, the digital media DT is illustrated as an image. In addition, in the converting, the digital media may be the result of converting the media data into a frequency domain by Fourier transform. For example, as described above, the media data may be converted into the frequency domain to generate digital media.

In addition, the watermark generation unit 130 may generate a watermark WT corresponding to a unique parameter (S320). Prior to this, the parameter generation unit 120 may generate the unique parameter. As described above, the unique parameter in the parameter generation unit 120 may be a PUF value. The PUF value may be extracted from at least one of a plurality of circuits based on a PUF. For example, the PUF value may be a PUF value of a circuit extracted corresponding to the number of peaks among the plurality of circuits.

In addition, the generating of the watermark corresponding to the unique parameter (S320) may include extracting attribute values from the PUF value as many as the number corresponding to the number of digital media magnitude peaks.

As described above, the watermark generation unit 130 may extract attribute values from the PUF value, which is a unique parameter, as many as the number corresponding to the number of magnitude peaks of the digital media. For example, the watermark generation unit 130 may extract the degrees (number) of magnitudes or magnitude peaks of the digital media that are greater or smaller than a predetermined value from the PUF value. In addition, after the attribute value is extracted, generating the watermark WT that reflects the attribute value may be included. For example, the watermark generation unit may generate the watermark WT that reflects the attribute value.

In addition, the insertion unit 140 may insert the watermark into the digital media to generate watermarked content WDT (S330). In the inserting of the watermark into the digital media to generate of the watermarked content WDT, the watermark that reflects the attribute value may be applied to a magnitude coefficient of the digital media. That is, the insertion unit 140 may apply the watermark that reflects the attribute value to the magnitude coefficient of the digital media.

In this case, the number of peaks of the watermarked content WDT may be equal to the number of peaks of the media data DT. The insertion unit 140 may finally compare the number of peaks of the watermarked content WDT with the number of peaks of the media data DT. For example, when the numbers are different according to the comparison, the generation of a watermark may be re-performed.

Referring to FIGS. 3 and 7, a method of verifying media to which a watermark is applied according to an embodiment may include converting a watermark into test digital media (S410), extracting the watermark (S420), and verifying the watermark (S430). For example, a verification device 200 may include a watermark extraction unit 210 and a watermark verification unit 220. In this case, the verification device 200 may be configured in a structure that is configured separately from the generation device or embedded together in a single device.

In the verification device 200, the watermark extraction unit 210 may convert the watermark into the test digital media (S410). That is, the watermark extraction unit 210 may convert input confirmation media data into a frequency domain by Fourier transform to generate confirmation digital media. Here, the confirmation media data may be a watermarked content or media data in which the watermarked content is modified.

In addition, the watermark extraction unit 210 may include DCT. The DCT stands for discrete cosine transform and is an algorithm that may convert data from a spatial domain to a frequency domain. For example, the watermark extraction unit 210 may convert an image (media) on a time axis to a frequency axis by performing the DCT.

For example, the watermark extraction unit 210 may extract a confirmation attribute value when the number of magnitude peaks of the confirmation digital media is two or more from the confirmation digital media obtained by converting the confirmation media data (S420). In addition, the watermark extraction unit 210 may extract the confirmation watermark W based on the information (position, pattern, etc.) of the watermark inserted in the generation device and an original image and the confirmation watermark value. The confirmation watermark may be formed of the attribute value applied to the magnitude coefficient of the digital media.

Furthermore, the watermark verification unit 220 may receive a unique parameter, which is a watermark authentication parameter, from a generation device or a memory. That is, the watermark verification unit 220 may compare the extracted confirmation watermark W with the unique parameter.

As in the generation device, the watermark verification unit 220 may confirm whether the confirmation watermark W has been formed based on the PUF value. In particular, the watermark verification unit 220 may compare the confirmation watermark W with the unique parameter to identify whether a leakage, etc. occurs. For example, the watermark verification unit 220 may perform value or bit comparison with the confirmation watermark W based on the above-described number of peaks of the PUF value (S430). For example, whether the media uses the original image or whether the watermark is the same can be easily identified. Therefore, it is possible to effectively prevent the problem of copyright infringement on media.

The generation method according to the disclosed embodiment may be implemented in the form of program commands that may be performed through various computer devices and recorded on a computer-readable medium. In addition, the embodiments of the present disclosure may be a computer-readable recording medium in which one or more programs including commands that execute the generation method are recorded.

In addition, the computer-readable medium may include program commands, data files, data structures, etc. alone or in combination. The program commands recorded on the medium may be specially designed and constructed for the present disclosure or may be known and available to those skilled in the art of computer software. Examples of the computer-readable recording medium include magnetic media such as a hard disk, a floppy disk, and a magnetic tape, optical media such as a CD-ROM and a DVD, and magneto-optical media such as a floptical disk, and hardware devices specifically configured to store and execute program commands, such as a ROM, a RAM, and a flash memory. Examples of the program commands include not only machine language code such as that produced by a compiler, but also high-level language code that may be executed by a computer using an interpreter or the like.

Here, a device-readable storage medium may be provided in the form of a non-transitory storage medium. Here, "non-transitory" is a tangible device and only means not including a signal (e.g., electromagnetic waves), and this term does not distinguish between cases in which data is stored semi-permanently and temporarily in the storage medium. For example, "non-temporary storage medium" may include a buffer in which data is temporarily stored.

According to one embodiment, a generation method according to various embodiments disclosed herein may be provided by being included in a computer program product. The computer program product may be traded between sellers and buyers as commodities. The computer program product may be distributed in the form of a device-readable storage medium (e.g., compact disc read only memory (CD-ROM)) or distributed online (e.g., downloading or uploading) via an application store (e.g., Play Store^{™}) or directly between two user devices (e.g., smartphones). In the case of the online distribution, at least some of the computer program products (e.g., a downloadable app) may be at least temporarily stored or temporarily generated in a device-readable storage medium such as a memory of a server of a manufacturer, a server of an application store, or a relay server.

Specifically, the computer program product may be implemented as a computer program product including a recording medium in which a program that performs the generation method according to the disclosed embodiment is stored.

Although the embodiments have been described above in detail, the scope of the present disclosure is not limited thereto, and various modifications and improvements by those skilled in the art using the basic concept of the present disclosure defined in the appended claims are also included in the scope of the present disclosure.

The term "-unit' used in the present embodiment means a software or hardware component such as a field-programmable gate array (FPGA) or an ASIC, and the "-unit' performs certain roles. However, the "unit" is not limited to software or hardware. The "unit" may be configured to be disposed in an addressable storage medium and configured to reproduce one or more processors. Therefore, as an example, the "unit" is components such as software components, object-oriented software components, class components, and task components, processes, functions, attributes, procedures, subroutines, segments of program code, drivers, firmware, microcode, circuits, data, database, data structures, tables, arrays, and variables. Functions provided in the components and "-units" may be combined into the smaller number of components and "unit" or separated into additional components and "units." Additionally, the components and "-units" may be implemented to reproduce one or more CPUs in a device or a security multimedia card.

According to the embodiments, it is possible to implement the generation method and generation device that are capable of protecting the digital content through the watermark to which the PUF is applied in whether media (voices, videos, documents, etc.) are authenticated.

In addition, the embodiments can implement the generation method and generation device that have more improved security through conversion, extraction of coefficients, etc.

Various and beneficial advantages and effects of the present disclosure are not limited to the above-described contents and will be more readily understood in a process of describing specific embodiments of the present disclosure.

Although embodiments have been mainly described above, these are only illustrative and do not limit the present invention, and those skilled in the art to which the present invention pertains can know that various modifications and applications not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

## Claims

1. A method of generating media to which a watermark is applied, the method comprising:
converting media data into digital media;
generating a watermark corresponding to a unique parameter; and
inserting the watermark into the digital media and generating a watermarked content,
wherein the unique parameter is a physically unclonable function (PUF) value.

2. The method of claim 1, wherein, in the converting, the digital media is a result of converting the media data into a frequency domain by Fourier transform.

3. The method of claim 1, wherein the generating of the watermark corresponding to the unique parameter includes extracting an attribute value as many as the number corresponding to the number of magnitude peaks of the digital media from the PUF value.

4. The method of claim 3, comprising generating the watermark that reflects the attribute value.

5. The method of claim 4, wherein the extracting of the attribute value includes extracting the attribute value when the number of magnitude peaks of the digital media is two or more.

6. The method of claim 3, wherein the inserting of the watermark into the digital media and generating the watermarked content includes applying the watermark that reflects the attribute value to a magnitude coefficient of the digital media.

7. The method of claim 6, wherein peaks of the watermarked content and the media data are the same.

8. The method of claim 3, wherein the PUF value is extracted from at least one of a plurality of circuits based on a PUF.

9. The method of claim 8, wherein the PUF value is a PUF value of a circuit extracted corresponding to the number of peaks among the plurality of circuits.

10. A device for generating media to which a watermark is applied, the device comprising:
a conversion unit configured to convert media data into digital media;
a parameter generation unit configured to generate a unique parameter;
a watermark generation unit configured to generate a watermark corresponding to the unique parameter; and
an insertion unit configured to insert the watermark into the digital media and generate a watermarked content,
wherein the unique parameter is a physically unclonable function (PUF) value.

11. The device of claim 10, wherein the digital media is a result of converting the media data into a frequency domain by Fourier transform.

12. The device of claim 10, wherein the watermark generation unit extracts an attribute value as many as the number corresponding to the number of magnitude peaks of the digital media from the PUF value.

13. The device of claim 12, wherein the watermark generation unit generates the watermark that reflects the attribute value.

14. The device of claim 13,
wherein the watermark generation unit extracts the attribute value when the number of magnitude peaks of the digital media is two or more.

15. The device of claim 12, wherein the insertion unit applies the watermark that reflects the attribute value to a magnitude coefficient of the digital media.
